# EUROPÄISCHE PATENTSCHRIFT

(11) **EP 3 205 926 B1**
(45) Veröffentlichungstag und Bekanntmachung des Hinweises auf die Patenterteilung: **07.04.2021**
(21) Anmeldenummer: 17152735.1
(22) Anmeldetag: 24.01.2017
(51) Int. Cl.: F21S 41/24, F21S 43/237, F21S 43/241, F21S 43/245, G02B 6/00

(54) **ZUSATZOPTIK FÜR STRAHLENTEILER BEI LICHTLEITERN**
ADDITIVE LENS FOR THE BEAM SPLITTER OF LIGHT GUIDES
OPTIQUE SUPPLÉMENTAIRE POUR SÉPARATEUR DE FAISCEAU DANS DES GUIDES DE LUMIERE

(30) Priorität: 04.02.2016 AT 500702016
(43) Veröffentlichungstag der Anmeldung: 16.08.2017
(73) Patentinhaber: ZKW Group GmbH, 3250 Wieselburg (AT)
(72) Erfinder: Moser, Martin, 3033 Altlengbach (AT); Ecker-Endl, Markus, 3500 Krems an der Donau (AT)
(74) Vertreter: Patentanwaltskanzlei Matschnig & Forsthuber OG

(56) Entgegenhaltungen:
- EP-A1- 2 620 790
- EP-A1- 3 098 500
- EP-A1- 3 252 368
- EP-A2- 2 592 333
- EP-A2- 2 955 062
- DE-B3-102011 016 002
- JP-A- 2014 007 014
- JP-A- 2015 204 275
- US-A1- 2002 102 058
- US-A1- 2015 253 481

## Beschreibung

Die Erfindung betrifft eine Leuchtanordnung für Fahrzeuge, aufweisend zumindest einen Lichtleiter, der sich ausgehend von einem in eine Gabelung mündenden gemeinsamen Endbereich an der Gabelung in zumindest zwei Lichtleiterabschnitte verzweigt, wobei der gemeinsame Endbereich eine Lichthauptausbreitungsrichtung aufweist, wobei die Lichtleiterabschnitte ein oder mehrere Auskopplungsstellen zur Auskopplung von Licht aufweisen, sowie ein Zwischenelement zur Homogenisierung von an der Gabelung aus dem zumindest einen Lichtleiter austretendem Streulicht, wobei sich das Zwischenelement zwischen den zumindest zwei Lichtleiterabschnitten erstreckt und eine Lichteintrittsfläche sowie eine der Lichteintrittsfläche gegenüberliegende Lichtaustrittsfläche zur Abstrahlung von Licht in einen zwischen den Lichtleiterabschnitten liegenden Bereich aufweist.

Leuchtanordnungen werden im Fahrzeugbau vermehrt eingesetzt, wobei von Lichtquellen stammendes Licht an einer Stirnfläche in einen Leuchtstab eingespeist wird. Das Licht wird im Inneren an den Begrenzungswänden des meist kreisrunden, gegebenenfalls aber auch einen anderen, z.B. elliptischen, Querschnitt aufweisenden Lichtleiters total reflektiert, jedoch an den Störstellen und im Wesentlichen an der den Störstellen gegenüberliegenden Seite abgestrahlt. Die Geometrie der Leuchtstäbe wird im KFZ-Bau oft durch Designvorgaben bestimmt, wobei sich die gewünschten Konturen oft nicht mehr durch einen einzigen Leuchtstab realisieren lassen und es in vielen Fällen erforderlich ist, einen Leuchtstab in zwei Äste aufzugabeln.

In den Leuchtanordnungen gemäß dem Stand der Technik ergeben sich Probleme hinsichtlich einer gleichmäßigen Leuchtdichte längs der Lichtleiter, vor allem im Bereich der Gabelung, wobei je nach Betrachtungswinkel unkontrollierbare Lichtflecken, vor allem aber dunkle Stellen auftreten Die Patentveröffentlichung EP-A1-3098500 gehört zum Stand der Technik gemäß Art. 54(3) EPÜ. Das Dokument weist eine Lichtleiteranordnung mit einer Gabelung und mit einem Zwischenelement auf, das einstückig mit dem Lichtleiter ausgebildet ist. Die Patentanmeldung EP-A1-2620790 offenbart eine Leuchtanordnung für Fahrzeuge mit zwei Lichtleitern, wobei die Lichtleiter in einer Gabelung gekrümmt auseinanderlaufen. In der Gabelung kann ein keilförmiger Element angeordnet sein.

Es ist daher eine Aufgabe der Erfindung, eine Leuchtanordnung zu schaffen, die die Abstrahlung eines homogenen Leuchtbildes ermöglicht und dabei einfach herstellbar ist. Dies Aufgabe wird mit einer Leuchtanordnung der eingangs genannte Art gelöst, bei welcher erfindungsgemäß die Lichteintrittsfläche des Zwischenelements von einem an einem Scheitelpunkt der Gabelung liegenden Strahlteilungspunkt beabstandet ist, wobei die Lichteintrittsfläche im Wesentlichen normal zur Lichthauptausbreitungsrichtung des gemeinsamen Endbereichs orientiert ist.

Dank den erfindungsgemäßen Merkmalen wird eine Leuchtanordnung geschaffen, die sowohl die Abstrahlung eines homogenen Leuchtbildes ermöglicht als auch einfach hergestellt werden kann. Durch das Vorsehen eines Zwischenelements, dessen Lichteintrittsfläche normal zur Lichthauptausbreitungsrichtung orientiert ist und das von dem Scheitelpunkt der Gabelung bzw. einem darin liegenden Strahlteilungspunkt beabstandet ist, kann sich das aus der Gabelung austretende Streulicht hin zu dem Zwischenelement ausbreiten, wobei das Licht durch die Lichteintrittsfläche in das Zwischenelement eintritt, sich innerhalb des Zwischenelements ausbreitet, zumindest teilweise vermengt und durch die Lichtaustrittsfläche des Zwischenelements austritt. Dadurch kann aus der Gabelung austretendes Streulicht in einfacher Weise homogenisiert werden. Diese Anordnung setzt keine formfüllende Anpassung der geometrischen Form des Zwischenelements an die Gabelung voraus, sodass zwischen dem Strahlteilungspunkt und dem Zwischenelement ein Luftraum verbleiben kann. Das Zwischenelement unterliegt daher niedrigeren Fertigungstoleranzen und kann folglich kostengünstig zwischen Leiterabschnitte eingebracht werden. Die erfindungsgemäße Leuchtanordnung muss nicht zwangsläufig nur ein einziges Zwischenelement aufweisen. Das Zwischenelement kann auch mehrstückig ausgebildet sein.

Unter dem Ausdruck "an einem Scheitelpunkt der Gabelung liegenden Strahlteilungspunkt" wird der Punkt verstanden, der - in Lichthauptausbreitungsrichtung gesehen - der letzte Punkt ist, an den sich die Lichtleiterabschnitte in einer Querschnittsdarstellung, die normal zur Lichthauptausbreitungsrichtung orientiert ist, berühren, sodass Streulicht aus diesem Punkt austreten kann.

Insbesondere kann vorgesehen sein, dass die Lichtaustrittsfläche des Zwischenelements im Wesentlichen parallel zur Lichteintrittsfläche orientiert ist. Damit lässt sich ein besonders einfacher Aufbau des Zwischenelements und damit der Leuchtanordnung realisieren.

Zudem kann vorgesehen sein, dass die Lichteintrittsfläche des Zwischenelements eine Kontur aufweist, die dergestalt zur Formung von aus dem Zwischenelement durch die Lichtaustrittsfläche austretendem Licht ausgebildet ist, dass im Bereich der Gabelung die winkelabhängige Intensität des aus der Lichtaustrittsfläche abgestrahlten Lichtes im Wesentlichen mit der winkelabhängigen Intensität des aus den Lichtleiterabschnitten abgestrahlten Lichtes im Wesentlichen übereinstimmt. Unter dem Bereich der Gabelung wird ein Bereich verstanden, der sich von dem Scheitelpunkt der Gabelung hin zu dem Zwischenelement und um den Abstand zwischen Scheitelpunkt und Zwischenelement über das Zwischenelement hinaus erstreckt. Durch eine gleichbleibende winkelabhängige Intensität der Lichtabstrahlung wird erreicht, dass der Übergang von abgestrahltem Licht im Bereich zwischen den Lichtleiterabschnitten und dem Zwischenelement aus diversen Betrachtungswinkeln kontinuierlich erscheint.

Zur zusätzlichen Homogenisierung des durch das Zwischenelement abgestrahlten Lichts kann vorgesehen sein, dass die Lichteintrittsfläche entlang ihrer Erstreckung zwischen den Lichtleiterabschnitten eine wellenförmige Kontur aufweist. Abhängig von der jeweiligen Einstrahlrichtung des Lichtbündels paralleler Strahlen erfolgt im Bereich der Vertiefungen eine divergente Brechung beim Eintritt, im Bereich der Erhebungen eine konvergente Brechung. Der Punkt, an welchem der Übergang zwischen divergent und konvergent erfolgt, kann abhängig von der Ausrichtung des Lichtbündels paralleler Strahlen "wandern".

Insbesondere kann dabei vorgesehen sein, dass die wellenförmige Kontur entsprechend einer Kontur einer Wellenfunktion ausgebildet ist, die sich in Richtung der Erstreckung des Zwischenelements von einem Lichtleiterabschnitt hin zu dem nächsten Lichtleiterabschnitt ausbreitet. Unter dem Ausdruck Kontur der Wellenfunktion wird die räumliche Verteilung der Istwerte der Wellenfunktion zu einem bestimmten Zeitpunkt verstanden. Eine solche Orientierung der Wellen hat sich als besonders vorteilhaft erwiesen.

Insbesondere kann vorgesehen sein, dass die Amplitude der Wellenfunktion 0,02 mm bis 0,1 mm beträgt und die Wellenlänge der Wellenfunktion in einem Bereich von 0,25 mm bis 1,5 mm liegt. Dadurch können Inhomogenitäten des über die Lichteintrittsfläche in das Zwischenelement eintretenden Lichts besonders effizient ausgeglichen werden. Die Wellenfunktion kann vorzugsweise in Form einer Sinusfunktion ausgebildet sein.

Zudem kann vorgesehen sein, dass die Wellenlänge der Wellenfunktion mit der Länge einzelner Auskopplungsstellen entlang der Längserstreckung eines Lichtleierabschnitts übereinstimmt. Dadurch kann mittels dem Zwischenelement ein möglichst ähnlicher Lichteindruck wie durch die Lichtleiterabschnitte hervorgerufen werden.

Besonders günstig kann es sein, wenn die Auskopplungsstellen der Lichtleiterabschnitte durch innerhalb der Lichtleiter ausgebildete Lichtauskopplungselemente, insbesondere Lichtauskopplungsprismen, ausgebildet sind.

Dabei kann es besonders vorteilhaft sein, wenn die Lichtleiterabschnitte jeweils zumindest einen durchgängigen Streifen an nebeneinander angeordneten Lichtauskopplungselementen aufweisen, wobei sich der Streifen entlang der Längserstreckung des jeweiligen Lichtleiterabschnittes bis zur Gabelung erstreckt, sodass Licht aus dem Lichtleiterabschnitt in die Lichteintrittsfläche des Zwischenelements gelenkt werden kann. Dadurch kann das durch das Zwischenelement abgestrahlte Licht zusätzlich homogenisiert werden.

Besonders günstig kann es sein, wenn die Lichtaustrittsfläche kontinuierlich, insbesondere glatt, verläuft. Insbesondere kann vorgesehen sein, dass die Lichtaustrittsfläche des Zwischenelements in einem Querschnitt quer zur Längserstreckung des Zwischenelements im Wesentlichen die gleiche Form wie die Lichtaustrittsfläche der Lichtleiterabschnitte in einem Querschnitt quer zur Längserstreckung der Lichtleiterabschnitte aufweist, wobei beispielsweise die Form gesehen entgegen der Lichtausbreitungsrichtung konvex ist. Unter dem Ausdruck "im Wesentlichen gleiche Form" wird eine Form verstanden, die bei Lichtabstrahlung für einen Betrachter denselben Eindruck erweckt wie die Form, auf die Bezug genommen wird. Im vorliegenden Fall bedeutet dies, dass der Betrachter mit freiem Auge zumindest während der Dauer der Lichtabstrahlung durch die Lichtleiteranordnung keinen Unterschied zwischen dem Zwischenelement und dem Übergang zu einem Lichtleiterabschnitt erkennen kann.

Insbesondere kann vorgesehen sein, dass der Lichtleiter eine Lichteinkopplungsfläche zur Einkopplung von Licht aufweist, der eine Lichtquelle zugeordnet ist. Besonders bevorzugt kann vorgesehen sein, dass die Lichtquelle eine LED umfasst.

Zur einfachen Befestigung des Zwischenelements an dem Lichtleiter oder einem Lichtleiterabschnitt ist erfindungsgemäß vorgesehen, dass das Zwischenelement mit einem Klemmmittel zur Klemmung an dem Lichtleiter oder an einem Lichtleiterabschnitt verbunden ist.

Erfindungsgemäß ist vorgesehen, dass das Zwischenelement mit einem Abdeckelement verbunden ist, das sich bis zur Gabelung erstreckt und in einem Klemmmittel mündet, das an der Gabelung zur Klemmung an der Gabelung angreift.

In einer besonders einfachen Variante der Erfindung kann vorgesehen sein, dass der Lichtleiter genau zwei zueinander verzweigte Lichtleiterabschnitte aufweist.

Um eine besonders gleichmäßige Homogenisierung zu erreichen, hat es sich als günstig erwiesen, wenn die Lichtleiterabschnitte im Bereich der Gabelung dergestalt ausgebildet sind, dass diese hin zu dem Zwischenelement gemeinsam mit dem Zwischenelement im Wesentlichen die Form eines gleichschenkeligen Dreiecks, insbesondere eines gleichseitigen Dreiecks ausbilden. Dabei müssen die Seiten dieses Dreiecks nicht zwangsweise geradlinig verlaufen, sondern können ebenso gekrümmt sein.

Besonders günstig kann es sein, wenn sich das Zwischenelement bis hin zu den Lichtleiterabschnitten erstreckt, sodass das durch die Lichtaustrittsfläche des Zwischenelements abstrahlbare Licht nahtlos an durch die Lichtleiter abstrahlbares Licht anschließen kann. Insbesondere kann zu diesem Zweck vorgesehen sein, dass das Zwischenelement die Lichtleiterabschnitte formschließend kontaktiert.

Zudem kann vorgesehen sein, dass das Zwischenelement zumindest 10 mm vom Strahlteilungspunkt beabstandet ist. Mit zunehmendem Abstand kann immer einfacher erreicht werden, dass das aus der Gabelung austretende Streulicht aufgrund seiner Divergenz die Eintrittsfläche des Zwischenstücks so weit überstreicht, dass das von den Lichtauskopplungsstellen der Lichtleiterabschnitte abgestrahlte Licht lückenlos, ohne dunkle Stellen zu hinterlassen, anschließt. Der Abstand zum Strahlteilungspunkt kann alternativ oder ergänzend dazu ebenso in Abhängigkeit von dem Durchmesser oder der Dicke des Lichtleiters oder dessen Krümmungsradius im Bereich der Gabelung bestimmt werden.

Insbesondere kann vorgesehen sein, dass das Zwischenelement aus transparentem Material besteht. Unter einem transparenten Material wird insbesondere ein farbloses Material verstanden.

Ein weiterer Aspekt der Erfindung betrifft einen Fahrzeugscheinwerfer, insbesondere Kraftfahrzeugscheinwerfer, mit zumindest einer erfindungsgemäßen Leuchtanordnung sowie ein Fahrzeug, insbesondere Kraftfahrzeug, mit zumindest einer erfindungsgemäßen Leuchtanordnung und/oder mit zumindest einem erfindungsgemäßen Fahrzeugscheinwerfer.

Die Erfindung ist im Folgenden anhand einer beispielhaften und nicht einschränkenden Ausführungsform näher erläutert, die in den Figuren veranschaulicht ist. Darin zeigt
Figur 1 eine schematische, perspektivische Seitendarstellung einer Leuchtanordnung,
Figur 2 eine Darstellung der Leuchtanordnung gemäß Figur 1 von schräg oben,
Figur 3a eine Detailansicht auf eine Gabelung der Leuchtanordnung gemäß Figuren 1 und 2 und Figur 3b eine zugehörige Schnittdarstellung,
Figuren 4a bis 4d unterschiedliche Darstellungen eines Zwischenelements gemäß den Figuren 1 bis 3,
Figur 5a Übersichtsdarstellung der erfindungsgemäßen Leuchtanordnung, wobei das Zwischenelement mit einem Klemmmittel verbunden ist, und
Figur 5b eine Detaildarstellung Klemmmittel des Zwischenelements.

In den folgenden Figuren bezeichnen - sofern nicht anders angegeben - gleiche Bezugszeichen gleiche Merkmale.

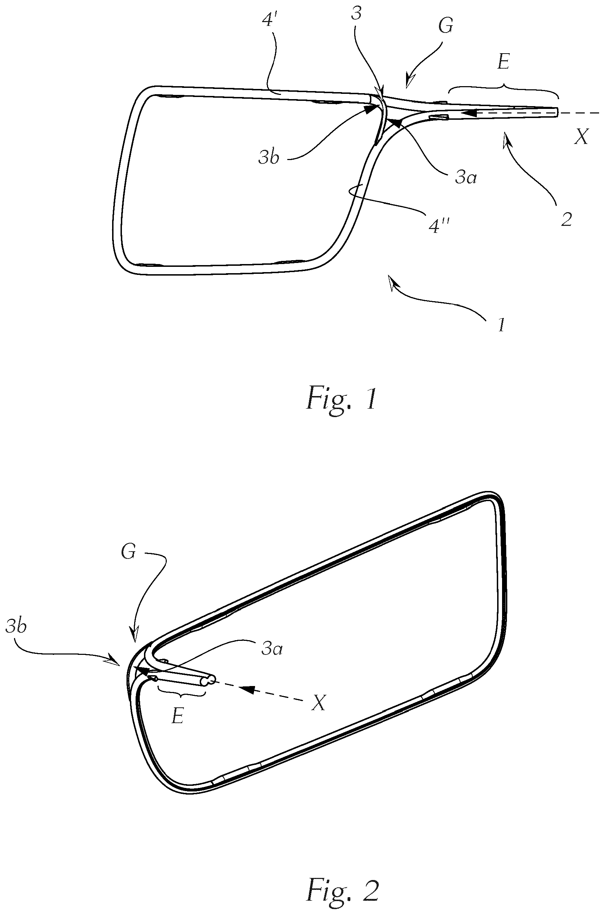

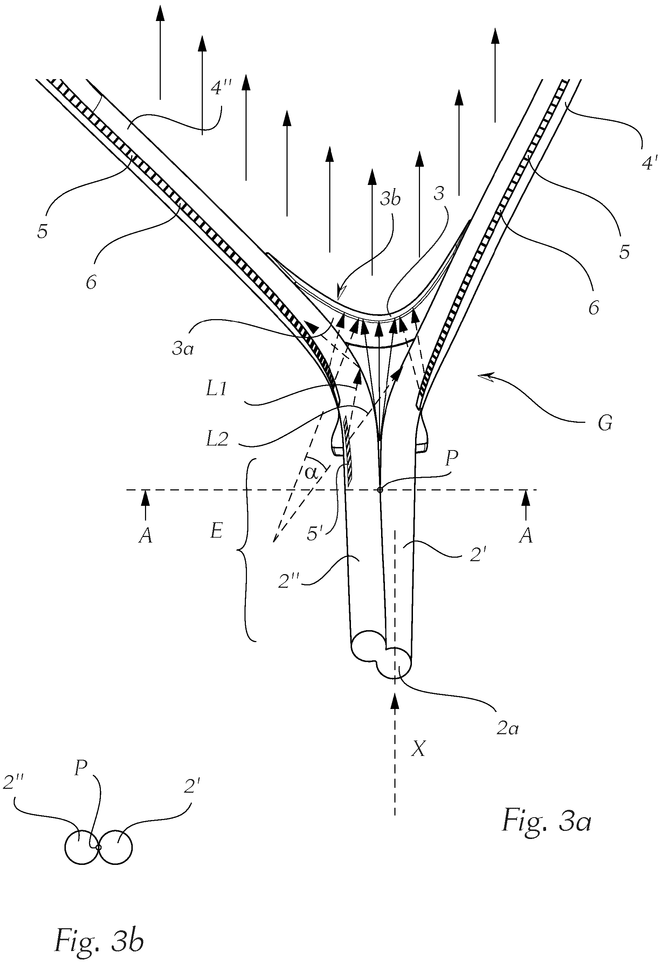

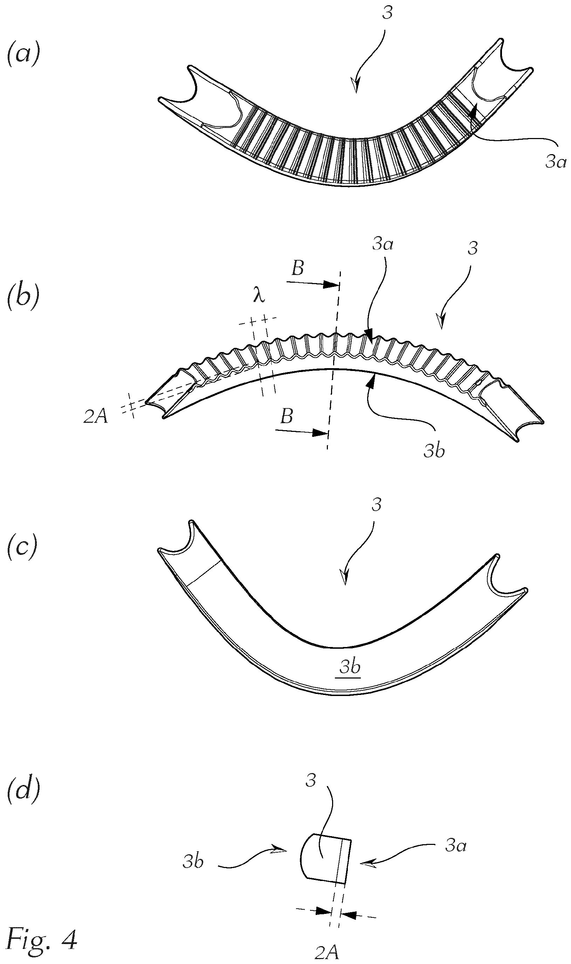

Figur 1 zeigt eine schematische, perspektivische Seitendarstellung einer Leuchtanordnung 1 für Fahrzeuge, aufweisend einen Lichtleiter 2, der im vorliegenden Beispiel aus zwei miteinander verbundenen Leuchtstäben 2' und 2" (siehe Figur 3a und 3b) ausgebildet ist und ein Zwischenelement 3. Die Anzahl der Lichtleiter 2 kann im Prinzip beliebig gewählt sein. Der Lichtleiter 2 zweigt sich ausgehend von einem gemeinsamen in eine Gabelung G mündenden Endbereich E an der Gabelung G in zumindest zwei Lichtleiterabschnitte 4' und 4" auf, die im gezeigten Ausführungsbeispiel zu einem Ring bzw. zu einem Rechteck mit abgerundeten Ecken miteinander verbunden sind. Der gemeinsame Endbereich E weist eine Lichthauptausbreitungsrichtung X auf, die in einem in einem Fahrzeug eingebauten Zustand beispielsweise mit der Richtung der Fahrzeuglängsachse übereinstimmen kann. Die Lichtleiterabschnitte 4' und 4" weisen in Figur 3 dargestellte Auskopplungsstellen 5 zur Auskopplung von Licht auf. Das Zwischenelement 3 ist zur Homogenisierung von an der Gabelung G aus dem zumindest einen Lichtleiter 2 austretendem Streulicht eingerichtet und erstreckt sich zwischen den zumindest zwei Lichtleiterabschnitten 4' und 4". Das Zwischenelement 3 weist eine in Figuren 4a bis 4c näher dargestellte Lichteintrittsfläche 3a sowie eine der Lichteintrittsfläche 3a gegenüberliegende Lichtaustrittsfläche 3b zur Abstrahlung von Licht in einen zwischen den Lichtleiterabschnitten 4' und 4" liegenden Bereich auf.

Die Lichteintrittsfläche 3a des Zwischenelements 3 ist von einem an einem Scheitelpunkt der Gabelung G liegenden Strahlteilungspunkt P (siehe Figur 3a sowie Figur 3b) beabstandet, wobei die Lichteintrittsfläche 3a im Wesentlichen normal zur Lichthauptausbreitungsrichtung X des gemeinsamen Endbereichs E orientiert ist. Die Lichtaustrittsfläche 3b und die Lichteintrittsfläche 3a können im Wesentlichen parallel zueinander orientiert sein.

Figur 2 zeigt eine Darstellung der Leuchtanordnung 1 gemäß Figur 1 von schräg oben. Figur 3a zeigt eine Detailansicht auf die Gabelung G der Leuchtanordnung 1 gemäß den Figuren 1 und 2. Darin sind die Auskopplungsstellen 5 erkennbar, die in Form von Lichtauskopplungsprismen ausgebildet sind. Im vorliegenden Ausführungsbeispiel weisen die zwei gezeigten Lichtleiterabschnitte 4'und 4" jeweils zumindest einen Streifen 6 auf, der durch eine durchgängige Nebeneinanderreihung von Lichtauskopplungselementen 5 ausgebildet ist, wobei sich die Streifen 6 entlang der Längserstreckung des jeweiligen Lichtleiterabschnittes 4' bzw. 4" bis hin zur Gabelung G erstrecken, sodass Licht aus den Lichtleiterabschnitten 4' bzw. 4" in die Lichteintrittsfläche des Zwischenelements gelenkt werden kann. Die Lichtaustrittsfläche 3b kann kontinuierlich, insbesondere glatt verlaufen. Der Lichtleiter 2 weist zudem eine Lichteinkopplungsfläche 2a zur Einkopplung von Licht auf, der eine in den Figuren nicht dargestellten Lichtquelle zugeordnet ist, bei der es sich vorzugsweise um eine LED handeln kann.

Wie in Figur 3a erkennbar ist, können sich ohne dem Vorsehen des Zwischenelements 3 dunkle Bereiche ergeben (z.B. im Winkelbereich α), die durch das Inhomogene Abstrahlverhalten im Bereich der Gabelung G verursacht sind. Dies ist vor allem dadurch bedingt, dass trotz dem Vorsehen von zusätzlichen Auskopplungselementen 5' (in Fig. 3a durch strichlierte Linien angedeutet), die bis tief in die Gabelung G hineinreichen können, aufgrund von Totalreflexion am jeweiligen Lichtleiterabschnitt (im vorliegenden Beispiel 4") keine Lichtauskopplung in den Bereich α erfolgen kann. Der Bereich des Lichtleiterabschnitts erscheint ohne Zwischenelement dunkel. So wird beispielsweise der Lichtstrahl L1 aufgrund von Totalreflexion innerhalb des Lichtleiters weitergelenkt und an einem Austritt gehindert. Der beispielhafte Lichtstrahl L2 dagegen, der durch zusätzliche Auskopplungselemente 5' aus dem Lichtleiterabschnitt 4" auskoppelbar wäre, würde auf den Lichtleiterabschnitt 4' auftreffen oder in diesen eintreten. Deshalb kann das Problem der inhomogenen Abstrahlung aus dem Lichtleiter in den Bereich α nicht in einfacher Weise durch das Vorsehen der zusätzlichen Auskopplungselemente 5' gelöst werden. Eine Homogenisierung des abgestrahlten Lichtes wird durch das Zwischenelement 3 erreicht, das sich zwischen den zumindest zwei Lichtleiterabschnitten 4' und 4" erstreckt. In Figur 3a sind in dem dem Zwischenelement 3 nachgelagerten Bereich beispielhaft zueinander parallel orientierte Lichtstrahlen dargestellt, die eine homogene Lichtabstrahlung verdeutlichen sollen. Dabei handelt es sich um eine vereinfachte Darstellung - tatsächlich sind die aus dem Zwischenelement 3 bzw. der Lichtaustrittsfläche 3b austretenden Lichtstrahlen an keine spezielle Orientierung gebunden sondern werden abhängig von der Einstrahlung in das Zwischenelement 3, der Ausgestaltung des Zwischenelementes 3, insbesondere der Lichteintritts- und austrittsflächen 3a und 3b in unterschiedliche Richtungen abgestrahlt. Wesentlich dabei ist, dass die Lichtverteilung stetig erfolgt. Darunter wird eine Lichtverteilung verstanden, die aus unterschiedlichen Blickwinkeln keine mit freiem Auge erkennbaren abgedunkelten Lücken im Lichtbild aufweist, sodass der Übergang zwischen den Lichtleiterabschnitten 4' und 4" unauffällig verläuft und im der Lichtverteilung weitgehend unbemerkt bleibt.

Die Lichtleiter können beispielsweise einen Durchmesser von 6 bis 12mm aufweisen. Der minimale Krümmungsradius in Lichtausbreitungsrichtung kann dadurch begrenzt sein, dass die Totalreflexionsbedingung verletzt wird und im Krümmungsbereich Fehllicht austreten kann. Sofern der Lichtleiter aus Polycarbonat (PC) ausgebildet ist, herrscht bis zu einem Winkel von 51° zwischen Lichtausbreitungsrichtung und Tangente an die Grenzfläche des Lichtleiterabschnitts Totalreflexion. Der Lichtleiter kann insbesondere gemäß einer Faustregel ausgelegt sein, nach der der Krümmungsradius (z.B. 40-80mm) das 7-fache des Durchmessers des Lichtleiters nicht unterschreiten sollte, um den Austritt von Fehllicht im Krümmungsbereich zu verhindern. Direkt im Strahlteilungspunkt P kann es zu einem Austritt von Fehllicht kommen, das einen Hotspot bildet, wenn es nicht homogenisiert wird.

Die Figuren 4a bis 4c zeigen unterschiedliche Darstellungen des Zwischenelements 3 gemäß den Figuren 1 bis 3. Figur 4a zeigt eine Vorderansicht auf ein Zwischenelement 3 auf die Lichteintrittsfläche 3a eines Zwischenelements 3. Darin ist erkennbar, dass die Lichteintrittsfläche 3a entlang ihrer Erstreckung zwischen den Lichtleiterabschnitten 4' und 4" eine wellenförmige Kontur aufweist. Die Kontur ist entsprechend einer Wellenfunktion ausgebildet, die sich in Richtung der Erstreckung des Zwischenelements 3 von einem Lichtleiterabschnitt 4' hin zu dem nächsten Lichtleiterabschnitt 4" ausbreitet, wobei die Amplitude A der Wellenfunktion beispielsweise zwischen 0,02 mm bis 0,1 mm betragen kann und die Wellenlänge der Wellenfunktion beispielsweise in einem Bereich von 0,25 mm bis 1,5 mm liegen kann. Die Wellenfunktion ist dabei vorzugsweise sinusförmig. Der Verlauf der Wellenfunktion ist in der Figur 4b gut erkennbar, die eine Schrägansicht auf das Zwischenelement 3 zeigt. Figur 4c zeigt eine Vorderansicht auf die Lichtaustrittsfläche des Zwischenelements 3.

Durch das Vorsehen des Zwischenelements 3 hingegen erfolgt eine Homogenisierung des Leuchtbildes, wodurch es möglich ist, Übergänge zwischen den Lichtleiterabschnitten 4' und 4" zu verbergen und eine durchgängig homogene Abstrahlung - und zwar auch im Übergangsbereich hin zu den Lichtleiterabschnitten - zu ermöglichen.

Wie in den Figuren 4a und 4b dargestellt, weist die Lichteintrittsfläche 3a des Zwischenelements 3 eine wellenförmige Kontur auf. Dadurch kann auf die Lichteintrittsfläche 3a auftreffendes Licht durch abwechselnd kollimierende und aufweitende Bereiche dergestalt verändert und abgelenkt werden, dass der gleiche Leuchteindruck erweckt werden kann, der durch die Auskoppelstellen 5 in jenen Bereichen der Lichtleiterabschnitte 4' und 4" hervorgerufen wird, denen kein Zwischenelement 3 nachgelagert ist. Dadurch kann ein besonders gleichmäßiger Leuchteindruck erzielt werden.

Die Auskoppelstellen 5 sind vorzugsweise als Prismen ausgebildet und liegen der Abstrahlfläche des jeweiligen Lichtleiterabschnitts gegenüber. In Lichtleitungsrichtung haben sie häufig einen Abstand von etwa 1,5 mm.

Insbesondere kann vorgesehen sein, dass die Lichtleiterabschnitte 4', 4" im Bereich der Gabelung G dergestalt ausgebildet sind, dass diese hin zu dem Zwischenelement 3 gemeinsam mit dem Zwischenelement 3 im Wesentlichen die Form eines gleichschenkeligen Dreiecks, insbesondere eines gleichseitigen Dreiecks ausbilden. Damit kann eine besonders homogene und einfache Anordnung der Lichtleiterabschnitte 4', 4" bzw. des durch die Lichtleiterabschnitte 4', 4" abgestrahlten Lichtes erzielt werden. Insbesondere kann zu diesem Zweck vorgesehen sein, dass sich das Zwischenelement 3 bis hin zu den Lichtleiterabschnitten 4', 4" erstreckt, sodass das durch die Lichtaustrittsfläche 3b des Zwischenelements 3 abstrahlbare Licht nahtlos an durch die Lichtleiter 2 abstrahlbares Licht anschließen kann.

Im gezeigten Ausführungsbeispiel weisen die Leuchtstäbe einen Durchmesser von 6 mm auf und das Zwischenelement 3 ist 32 mm von dem Strahlteilungspunkt P beabstandet. In dem vorliegenden Beispiel sind diese Abmessungen besonders dazu geeignet, eine Leuchtanordnung zu schaffen, bei der das aus der Gabelung G austretende Streulicht aufgrund seiner Divergenz die Eintrittsfläche 3a des Zwischenelements 3 so weit überstreicht, dass das von den Lichtauskopplungsstellen 5 der Lichtleiterabschnitte 4' und 4" abgestrahlte Licht lückenlos, ohne dunkle Stellen zu hinterlassen, anschließt. Die Lichtleiterabschnitte 4' und 4" selbst weisen an ihren Lichtaustrittsflächen, also jenen Flächen, durch die das Licht aus den Lichtleiterabschnitten austritt, keine Auskopplungsstellen auf, wodurch die Effizienz der Leuchtanordnung verbessert ist. Die Auskopplungsstellen 5 sind vielmehr gegenüber diesen Lichtaustrittsflächen angeordnet. Es lassen sich dadurch lange Lichtleiter konstruieren. Geringere Effizienz ließe sich durch einen höheren eingekoppelten Lichtstrom ausgleichen, wodurch allerdings die Wärmeverluste in der Leuchtanordnung, insbesondere der Leuchtquelle steigen und daher erhöhte Kühlleistung erforderlich ist.

Figur 4d zeigt eine Schnittdarstellung des Zwischenelements 3 entlang der Schnittlinie BB der Figur 4b. Darin ist gut erkennbar, dass die Lichtaustrittsfläche 3b des Zwischenelements 3 in dem vorliegenden Querschnitt, der quer zur Längserstreckung des Zwischenelements 3 orientiert ist, eine konvexe Form aufweist, die im vorliegenden Beispiel im Wesentlichen der Form der Lichtaustrittsfläche der Lichtleiterabschnitte 4', 4" in einem Querschnitt quer zur Längserstreckung der Lichtleiterabschnitt 4', 4" entspricht.

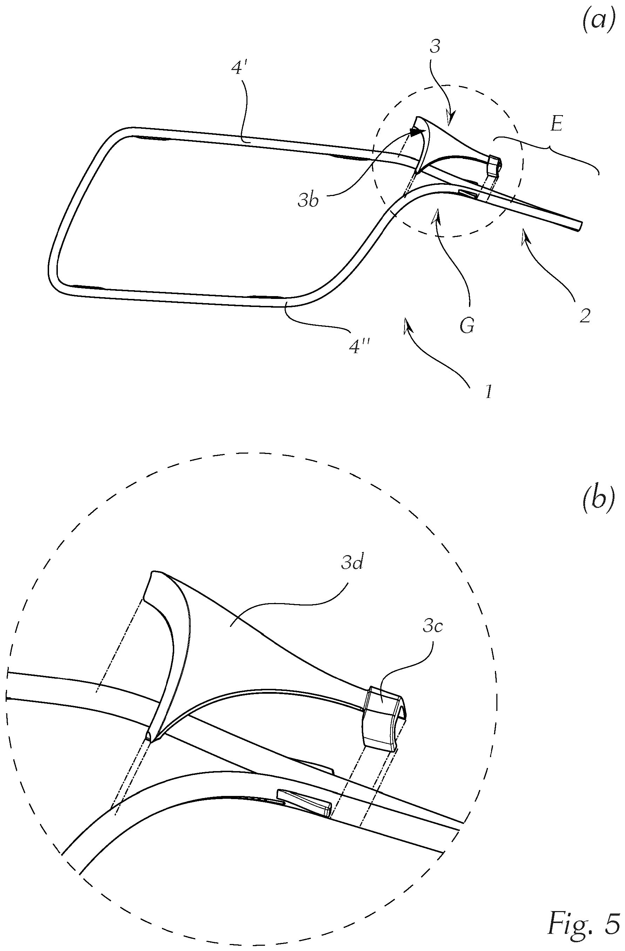

Figur 5a zeigt eine Übersichtsdarstellung der erfindungsgemäßen Leuchtanordnung 1, wobei das Zwischenelement 3 mit einem Klemmmittel 3c zur Klemmung an dem Lichtleiter 2 oder an einem Lichtleiterabschnitt 4', 4" verbunden ist, wie dies in der Detaildarstellung gemäß Figur 5b erkennbar ist. Insbesondere kann das Zwischenelement 3 mit einem Abdeckelement 3d verbunden sein, das sich bis zur Gabelung G erstreckt und in einem Klemmmittel 3c mündet, das an der Gabelung G zur Klemmung an der Gabelung G angreift.

## Patentansprüche

1. Leuchtanordnung (1) für Fahrzeuge, aufweisend
- zumindest einen Lichtleiter (2), der sich ausgehend von einem in eine Gabelung (G) mündenden gemeinsamen Endbereich (E) an der Gabelung (G) in zumindest zwei Lichtleiterabschnitte (4', 4") verzweigt, wobei der gemeinsame Endbereich (E) eine Lichthauptausbreitungsrichtung (X) aufweist, wobei die Lichtleiterabschnitte (4', 4") ein oder mehrere Auskopplungsstellen (5) zur Auskopplung von Licht aufweisen, sowie
- ein Zwischenelement (3) zur Homogenisierung von an der Gabelung (G) aus dem zumindest einen Lichtleiter (2) austretendem Streulicht, wobei sich das Zwischenelement (3) zwischen den zumindest zwei Lichtleiterabschnitten (4', 4") erstreckt und eine Lichteintrittsfläche (3a) sowie eine der Lichteintrittsfläche (3a) gegenüberliegende Lichtaustrittsfläche (3b) zur Abstrahlung von Licht in einen zwischen den Lichtleiterabschnitten (4', 4") liegenden Bereich aufweist, wobei die Lichteintrittsfläche (3a) des Zwischenelements (3) von einem an einem Scheitelpunkt der Gabelung (G) liegenden Strahlteilungspunkt beabstandet ist, wobei die Lichteintrittsfläche (3a) im Wesentlichen normal zur Lichthauptausbreitungsrichtung (X) des gemeinsamen Endbereichs (E) orientiert ist, wobei das Zwischenelement (3) mit einem Klemmmittel (3c) zur Klemmung an dem Lichtleiter (2) oder an einem Lichtleiterabschnitt (4', 4") verbunden ist und/oder wobei das Zwischenelement (3) mit einem Abdeckelement (3d) verbunden ist, das sich bis zur Gabelung (G) erstreckt und in dem, bzw. in einem Klemmmittel (3c) mündet, das an der Gabelung (G) zur Klemmung an der Gabelung (G) angreift.

2. Leuchtanordnung (1) nach Anspruch 1, **dadurch gekennzeichnet, dass** die Lichtaustrittsfläche (3b) im Wesentlichen parallel zur Lichteintrittsfläche (3a) orientiert ist.

3. Leuchtanordnung (1) nach einem der vorhergehenden Ansprüche, **dadurch gekennzeichnet, dass** die Lichteintrittsfläche (3a) des Zwischenelements (3) eine Kontur aufweist, die dergestalt zur Formung von aus dem Zwischenelement (3) durch die Lichtaustrittsfläche (3b) austretendem Licht ausgebildet ist, dass im Bereich der Gabelung (G) die winkelabhängige Intensität des aus der Lichtaustrittsfläche (3b) abgestrahlten Lichtes im Wesentlichen mit der winkelabhängigen Intensität des aus den Lichtleiterabschnitten (4', 4") abgestrahlten Lichtes im Wesentlichen übereinstimmt.

4. Leuchtanordnung (1) nach einem der vorhergehenden Ansprüche, **dadurch gekennzeichnet, dass** die Lichteintrittsfläche (3a) entlang ihrer Erstreckung zwischen den Lichtleiterabschnitten (4', 4") eine wellenförmige Kontur aufweist.

5. Leuchtanordnung (1) nach Anspruch 4, **dadurch gekennzeichnet, dass** die wellenförmige Kontur entsprechend einer Kontur einer Wellenfunktion ausgebildet ist, die sich in Richtung der Erstreckung des Zwischenelements (3) von einem Lichtleiterabschnitt (4', 4") hin zu dem nächsten Lichtleiterabschnitt (4', 4") ausbreitet, wobei insbesondere die Amplitude der Wellenfunktion 0,02 mm bis 0,1 mm beträgt und die Wellenlänge der Wellenfunktion in einem Bereich von 0,25 mm bis 1,5 mm liegt, wobei vorzugsweise die Wellenlänge der Wellenfunktion mit der Länge einzelner Auskopplungsstellen (5) entlang der Längserstreckung eines Lichtleierabschnitts (4', 4") übereinstimmt.

6. Leuchtanordnung (1) nach einem der vorhergehenden Ansprüche, **dadurch gekennzeichnet, dass** die Auskopplungsstellen (5) der Lichtleiterabschnitte (4', 4") durch innerhalb der Lichtleiter (2) ausgebildete Lichtauskopplungselemente, insbesondere Lichtauskopplungsprismen, ausgebildet sind, wobei insbesondere die Lichtleiterabschnitte (4', 4") jeweils zumindest einen durchgängigen Streifen an nebeneinander angeordneten Lichtauskopplungselementen aufweisen, wobei sich der Streifen entlang der Längserstreckung des jeweiligen Lichtleiterabschnittes bis zur Gabelung (G) erstreckt, sodass Licht aus dem Lichtleiterabschnitt (4', 4") in die Lichteintrittsfläche (3a) des Zwischenelements (3) gelenkt werden kann.

7. Leuchtanordnung (1) nach einem der vorhergehenden Ansprüche, **dadurch gekennzeichnet, dass** die Lichtaustrittsfläche (3b) kontinuierlich, insbesondere glatt, verläuft.

8. Leuchtanordnung (1) nach einem der vorhergehenden Ansprüche, **dadurch gekennzeichnet, dass** die Lichtaustrittsfläche (3b) des Zwischenelements (3) in einem Querschnitt quer zur Längserstreckung des Zwischenelements (3) im Wesentlichen die gleiche Form wie die Lichtaustrittsfläche der Lichtleiterabschnitte (4', 4") in einem Querschnitt quer zur Längserstreckung der Lichtleiterabschnitt (4', 4") aufweist, wobei beispielsweise die Form gesehen entgegen der Lichtausbreitungsrichtung konvex ist.

9. Leuchtanordnung (1) nach einem der vorhergehenden Ansprüche, **dadurch gekennzeichnet, dass** der Lichtleiter (2) eine Lichteinkopplungsfläche zur Einkopplung von Licht aufweist, der eine Lichtquelle zugeordnet ist, wobei vorzugsweise die Lichtquelle eine LED umfasst.

10. Leuchtanordnung (1) nach einem der vorhergehenden Ansprüche, **dadurch gekennzeichnet, dass** der Lichtleiter (2) genau zwei zueinander verzweigte Lichtleiterabschnitte (4', 4") aufweist, wobei vorzugsweise die Lichtleiterabschnitte (4', 4") im Bereich der Gabelung (G) dergestalt ausgebildet sind, dass diese hin zu dem Zwischenelement (3) gemeinsam mit dem Zwischenelement (3) im Wesentlichen die Form eines gleichschenkeligen Dreiecks, insbesondere eines gleichseitigen Dreiecks ausbilden.

11. Leuchtanordnung (1) nach einem der vorhergehenden Ansprüche, **dadurch gekennzeichnet, dass** sich das Zwischenelement (3) bis hin zu den Lichtleiterabschnitten (4', 4") erstreckt, sodass das durch die Lichtaustrittsfläche (3b) des Zwischenelements (3) abstrahlbare Licht nahtlos an durch die Lichtleiter (2) abstrahlbares Licht anschließen kann.

12. Leuchtanordnung (1) nach einem der vorhergehenden Ansprüche, **dadurch gekennzeichnet, dass** das Zwischenelement (3) zumindest 10 mm vom Strahlteilungspunkt beabstandet ist.

13. Leuchtanordnung (1) nach einem der vorhergehenden Ansprüche, **dadurch gekennzeichnet, dass** das Zwischenelement (3) aus transparentem Material besteht.

14. Fahrzeugscheinwerfer, insbesondere Kraftfahrzeugscheinwerfer, mit zumindest einer Leuchtanordnung (1) nach einem der vorhergehenden Ansprüche.

15. Fahrzeug, insbesondere Kraftfahrzeug, mit zumindest einer Leuchtanordnung (1) nach einem der Ansprüche 1 bis 13 und/ oder mit zumindest einem Fahrzeugscheinwerfer nach Anspruch 14.

## Claims

1. Lighting arrangement (1) for vehicles, comprising
- at least one light guide (2) which, starting from a common end region (E) opening into a bifurcation (G), branches at the bifurcation (G) into at least two light guide sections (4', 4"), the common end region (E) having a light main propagation direction (X), the light guide sections (4', 4") having one or more decoupling points (5) for decoupling light, as well as
- an intermediate element (3) for homogenising scattered light emerging from the at least one light guide (2) at the bifurcation (G), the intermediate element (3) extending between the at least two light guide sections (4', 4") and having a light entry surface (3a) and a light exit surface (3b) opposite the light entry surface (3a) for radiating light into a region lying between the light guide sections (4', 4"), wherein the light entrance surface (3a) of the intermediate element (3) is spaced from a beam splitting point located at a vertex of the bifurcation (G), the light entrance surface (3a) being oriented substantially normal to the light main propagation direction (X) of the common end portion (E), wherein the intermediate element (3) is connected to a clamping means (3c) for clamping to the light guide (2) or to a light guide section (4', 4") and/or wherein the intermediate element (3) is connected to a covering element (3d) which extends up to the bifurcation (G) and in which or in a clamping means (3c) which engages on the bifurcation (G) for clamping on the bifurcation (G).

2. Lighting arrangement (1) according to claim 1, **characterised in that** the light exit surface (3b) is oriented substantially parallel to the light entry surface (3a).

3. Lighting arrangement (1) according to one of the preceding claims, **characterized in that** the light entry surface (3a) of the intermediate element (3) has a contour which is designed in such a way as to shape light emerging from the intermediate element (3) through the light exit surface (3b), **in that**, in the region of the bifurcation (G), the angle-dependent intensity of the light emitted from the light exit surface (3b) essentially corresponds to the angle-dependent intensity of the light emitted from the light guide sections (4', 4").

4. Lighting arrangement (1) according to one of the preceding claims, **characterised in that** the light entry surface (3a) has an undulating contour along its extension between the light guide sections (4', 4").

5. Lighting arrangement (1) according to claim 4, **characterised in that** the wave-shaped contour is formed in accordance with a contour of a wave function which propagates in the direction of the extension of the intermediate element (3) from one light guide section (4', 4") towards the next light guide section (4', 4"), wherein in particular the amplitude of the wave function is 0.02 mm to 0.1 mm and the wavelength of the wave function lies in a range of 0.25 mm to 1.5 mm, wherein preferably the wavelength of the wave function coincides with the length of individual decoupling points (5) along the longitudinal extension of a light guide section (4', 4").

6. Lighting arrangement (1) according to one of the preceding claims, **characterised in that the decoupling** points (5) of the light guide sections (4', 4") are formed by light decoupling elements, in particular light decoupling prisms, formed within the light guides (2), wherein in particular the light guide sections (4', 4") each have at least one continuous strip of light extraction elements arranged next to one another, the strip extending along the longitudinal extent of the respective light guide section as far as the bifurcation (G), so that light can be directed from the light guide section (4', 4") into the light entry surface (3a) of the intermediate element (3).

7. Lighting arrangement (1) according to one of the preceding claims, **characterised in that** the light emission surface (3b) is continuous, in particular smooth.

8. Lighting arrangement (1) according to one of the preceding claims, **characterised in that** the light emission surface (3b) of the intermediate element (3) in a cross-section transverse to the longitudinal extension of the intermediate element (3) has substantially the same shape as the light emission surface of the light guide sections (4', 4") in a cross-section transverse to the longitudinal extension of the light guide sections (4', 4"), the shape being convex, for example, when viewed against the direction of light propagation.

9. Lighting arrangement (1) according to one of the preceding claims, **characterised in that** the light guide (2) has a light coupling surface for coupling in light, to which a light source is assigned, preferably the light source comprising an LED.

10. Lighting arrangement (1) according to one of the preceding claims, **characterised in that** the light guide (2) has precisely two light guide sections (4', 4") branched to one another, the light guide sections (4', 4") preferably being designed in the region of the bifurcation (G) in such a way that, towards the intermediate element (3), they form together with the intermediate element (3) essentially the shape of an isosceles triangle, in particular an equilateral triangle.

11. Lighting arrangement (1) according to one of the preceding claims, **characterised in that** the intermediate element (3) extends up to the light guide sections (4', 4") so that the light radiated through the light exit surface (3b) of the intermediate element (3) can seamlessly join light radiated through the light guides (2).

12. Lighting arrangement (1) according to one of the preceding claims, **characterised in that** the intermediate element (3) is spaced at least 10 mm from the beam splitting point.

13. Lighting arrangement (1) according to one of the preceding claims, **characterised in that** the intermediate element (3) consists of transparent material.

14. Vehicle headlamp, in particular motor vehicle headlamp, having at least one lighting arrangement (1) according to one of the preceding claims.

15. Vehicle, in particular motor vehicle, having at least one lighting arrangement (1) according to one of claims 1 to 13 and/or having at least one vehicle headlamp according to claim 14.

## Revendications

1. Agencement de lumière (1) pour les véhicules, comprenant
- au moins un guide de lumière (2) qui, partant d'une zone d'extrémité commune (E) débouchant dans une bifurcation (G), se ramifie à la bifurcation (G) en au moins deux sections de guide de lumière (4', 4"), la zone d'extrémité commune (E) ayant une direction de propagation principale de la lumière (X), les sections de guide de lumière (4', 4") ayant un ou plusieurs points de découplage (5) pour découpler la lumière, ainsi que
- un élément intermédiaire (3) pour homogénéiser la lumière diffusée sortant du au moins un guide de lumière (2) à la bifurcation (G), l'élément intermédiaire (3) s'étendant entre les au moins deux sections de guide de lumière (4', 4") et présentant une surface d'entrée de lumière (3a) et une surface de sortie de lumière (3b) opposée à la surface d'entrée de lumière (3a) pour émettre de la lumière dans une zone située entre les sections de guide de lumière (4', 4") dans lequel la surface d'entrée de la lumière (3a) de l'élément intermédiaire (3) est espacée d'un point de séparation du faisceau situé au sommet de la bifurcation (G), la surface d'entrée de la lumière (3a) étant orientée sensiblement perpendiculairement à la direction de propagation principale de la lumière (X) de la partie d'extrémité commune (E), dans lequel l'élément intermédiaire (3) est relié à un moyen de serrage (3c) pour le serrage au guide de lumière (2) ou à une section de guide de lumière (4', 4") et/ou dans lequel l'élément intermédiaire (3) est relié à un élément de recouvrement (3d) qui s'étend jusqu'à la bifurcation (G) et dans lequel ou dans un moyen de serrage (3c) qui s'engage sur la bifurcation (G) pour le serrage sur la bifurcation (G).

2. Agencement de lumière (1) selon la revendication 1, **caractérisée en ce que** la surface de sortie de la lumière (3b) est orientée sensiblement parallèlement à la surface d'entrée de la lumière (3a).

3. Agencement de lumière (1) selon l'une des revendications précédentes, **caractérisé en ce que** la surface d'entrée de lumière (3a) de l'élément intermédiaire (3) présente un contour qui est conçu de manière à former la lumière sortant de l'élément intermédiaire (3) à travers la surface de sortie de lumière (3b), **en ce que**, dans la région de la bifurcation (G), l'intensité en fonction de l'angle de la lumière émise par la surface de sortie de la lumière (3b) correspond essentiellement à l'intensité en fonction de l'angle de la lumière émise par les sections de guides de lumière (4', 4").

4. Agencement de lumière (1) selon l'une des revendications précédentes, **caractérisé en ce que** la surface émettrice de lumière (3a) présente un contour ondulé le long de son extension entre les sections de guide de lumière (4', 4").

5. Agencement de lumière (1) selon la revendication 4, **caractérisé en ce que** le contour en forme d'onde est formé selon un contour d'une fonction d'onde se propageant dans la direction d'extension de l'élément intermédiaire (3) d'une section de guide de lumière (4', 4") vers la section de guide de lumière suivante (4', 4"), dans laquelle en particulier l'amplitude de la fonction d'onde est de 0,02 mm à 0,1 mm et la longueur d'onde de la fonction d'onde se situe dans une plage de 0,25 mm à 1,5 mm, dans laquelle de préférence la longueur d'onde de la fonction d'onde coïncide avec la longueur des différents points de découplage (5) le long de l'extension longitudinale d'une section de guide de lumière (4', 4").

6. Agencement de lumière (1) selon l'une des revendications précédentes, **caractérisé en ce que les** points de découplage (5) des sections de guides de lumière (4', 4") sont formés par des éléments de découplage de la lumière, en particulier des prismes de découplage de la lumière, formés dans les guides de lumière (2), les sections de guides de lumière (4'), 4") comportent chacun au moins une bande continue d'éléments d'extraction de la lumière disposés les uns à côté des autres, la bande s'étendant le long de l'extension longitudinale de la section de guidage de la lumière respective jusqu'à la bifurcation (G), de sorte que la lumière peut être dirigée de la section de guidage de la lumière (4', 4") dans la surface d'entrée de la lumière (3a) de l'élément intermédiaire (3).

7. Agencement de lumière (1) selon l'une des revendications précédentes, **caractérisée en ce que** la surface d'émission de lumière (3b) est continue, en particulier lisse.

8. Agencement de lumière (1) selon l'une des revendications précédentes, **caractérisé en ce que** la surface émettrice de lumière (3b) de l'élément intermédiaire (3), en section transversale à l'extension longitudinale de l'élément intermédiaire (3), a essentiellement la même forme que la surface émettrice de lumière des sections de guidage de la lumière (4', 4"), en section transversale à l'extension longitudinale des sections de guidage de la lumière (4', 4"), la forme étant par exemple convexe, vue dans le sens opposé à la direction de propagation de la lumière.

9. Agencement de lumière (1) selon l'une quelconque des revendications précédentes, **caractérisé en ce que** le guide de lumière (2) comprend une surface de couplage de la lumière pour coupler la lumière à laquelle est associée une source lumineuse, de préférence la source lumineuse comprenant une LED.

10. Agencement de lumière (1) selon l'une des revendications précédentes, **caractérisé en ce que** le guide de lumière (2) présente exactement deux sections de guide de lumière (4', 4") qui sont ramifiées l'une par rapport à l'autre, les sections de guide de lumière (4', 4") étant de préférence conçues dans la zone de la bifurcation (G) de telle sorte qu'elles forment, en direction de l'élément intermédiaire (3), essentiellement la forme d'un triangle isocèle, en particulier d'un triangle équilatéral.

11. Agencement de lumière (1) selon l'une des revendications précédentes, **caractérisé en ce que l'**élément intermédiaire (3) s'étend jusqu'aux sections de guides de lumière (4', 4"), de sorte que la lumière qui peut être émise à travers la surface de sortie de lumière (3b) de l'élément intermédiaire (3) peut rejoindre sans interruption la lumière qui peut être émise à travers les guides de lumière (2).

12. Agencement de lumière (1) selon l'une des revendications précédentes, **caractérisé en ce que** l'élément intermédiaire (3) est espacé d'au moins 10 mm du point de séparation du faisceau.

13. Agencement de lumière (1) selon l'une des revendications précédentes, **caractérisé en ce que** l'élément intermédiaire (3) est en matériau transparent.

14. Projecteur de véhicule, en particulier projecteur de véhicule automobile, ayant au moins un agencement de lumière (1) selon l'une des revendications précédentes.

15. Véhicule, notamment véhicule automobile, ayant au moins un agencement de lumière (1) selon l'une des revendications 1 à 13 et/ou ayant au moins un phare de véhicule selon la revendication 14.
